# EUROPÄISCHE PATENTANMELDUNG

(11) **EP 4 563 817 A1**
(43) Veröffentlichungstag der Anmeldung: **04.06.2025**
(21) Anmeldenummer: 24205615.8
(22) Anmeldetag: 09.10.2024
(51) Int. Cl.: F03G 6/00, F03D 9/17, F04B 35/00, F04B 39/00, H02J 15/00

(54) **VERFAHREN UND VORRICHTUNG ZUM SPEICHERN VON ENERGIE AUS INSBESONDERE ERNEUERBAREN ENERGIEQUELLEN**

(30) Priorität: 09.10.2023 DE 102023127441
(71) Anmelder: Bächli, Emil, 3825 Mürren (CH)
(72) Erfinder: Bächli, Emil, 3825 Mürren (CH)
(74) Vertreter: Patentanwälte und Rechtsanwalt Weiß, Arat & Partner mbB

(57) **Zusammenfassung**

Bei einem Verfahren zum Speichern von Energie aus insbesondere erneuerbaren Energiequellen und Umwandeln dieser gespeicherten Energie in elektrische Energie in einem Speicher (5), soll in mehreren Rohren (2.1-2.3) abwechselnd Luft unter hohen Druck gesetzt und diese kontinuierlich in den Speicher (5) eingepresst werden.

## Beschreibung

### Erfindung

Diese Erfindung ermöglicht die saisonale Speicherung umweltfreundlicher Sonnen- und Windenergie über Monate. Für die Umwandlung des Stromes ist es gelungen ein Kraftwerk zu entwickeln, welches die gespeicherte Pressluft in gewaltigen Mengen in Strom umwandelt, mit Explosionsschutz. Als beste Lösung für die Schweiz mit Stromüberfluss auch im Winter. Die Ladung und Entladung dieser neuen Speichertechnik ist entwickelt und kann sofort gebaut werden.

### Presslufterzeugung mit Wasserkolbenkompressor

Für die Energiespeicherung mit Druckluft eignen sich normale Luftkompressoren nicht, wegen ihres schlechten Wirkungsgrades, sondern eine Neukonstruktion mit einem abnutzungsfreien Wasserkolbenpressluftkompressor. Es braucht hierzu ein Wasserbecken aus z.B. Metall- oder Beton, ca 10 m Länge, 3 m Breite, 2,50 m Höhe. Je nach Bedarf kann man die Anlage viel grösser bauen. Die gereinigte Wasserfüllung erfolgt mit umweltfreundlichem Oelzusatz.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine perspektivische Ansicht eines Ausschnitts aus einer erfindungsgemässen Vorrichtung zum Speichern von Energie aus insbesondere erneuerbaren Energiequellen;
Figur 2 einen schematisch dargestellten Querschnitt durch den Ausschnitt der Vorrichtung zum Speichern von Energie aus insbesondere erneuerbaren Energiequellen gemäss Figur 1;
Figur 3 eine perspektivische Ansicht eines Ausschnitts aus einer erfindungsgemässen Vorrichtung zur Rückgewinnung von Energie aus einem Speicher;
Figur 4 einen schematisch dargestellten Querschnitt durch den Ausschnitt der Vorrichtung zur Rückgewinnung von Energie aus insbesondere erneuerbaren Energiequellen gemäss Figur 3.
Figur 5 zeigt ein weiteres schematisch dargestelltes erfindungsgemässes Ausführungsbeispiel von schräg oben;
Figur 6 zeigt die Seitenansicht der Figur 5.

### Füllung des Speichers

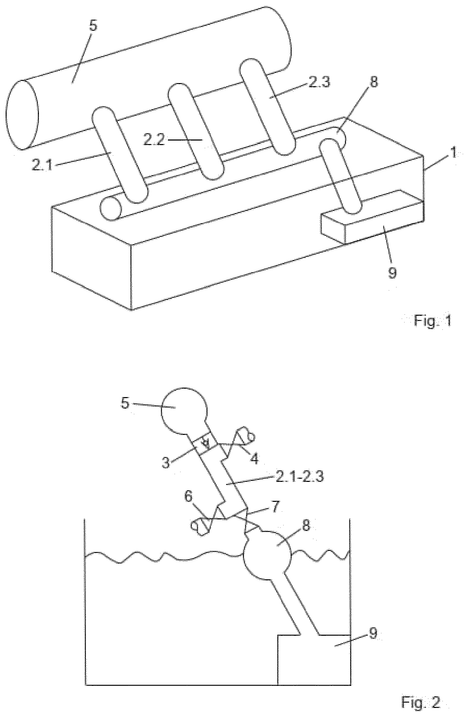

Gemäss Figur 1 sind über einem Becken 1 drei Rohre 2.1, 2.2, 2.3 oder mehr, je nach Pumpleistung, nebeneinander schräg nach oben angeordnet. Das obere Ende der bevorzugt aus Chromstahl bestehenden Rohre 2.1, 2.2, 2.3 ist nach Figur 2 mit einem Rückschlagventil 3 zu einem Speicher 5 und einem Luftabschlussventil 4 versehen. Das untere Ende der Rohre 2.1, 2.2, 2.3 ist mit einem Wasserablassventil 6 versehen mit grossem Durchmesser, damit das Wasser nach jedem Presstakt schnell in das Becken zurückfliessen kann. Die Steilheit der Rohre ist bestimmend für die Schnelligkeit des Wasserabflusses durch Schwerkraft.

Die Rohre 2.1, 2.2, 2.3 sind über ein Füllventil 7 mit einer Verbindungsleitung 8 mit einem Kolbenkompressor/einer Wasser-Kolbenpumpe 9 verbunden, sodass jedes Rohr einzeln bei Öffnung des Ventils mit Wasser gefüllt werden kann. Mit einer elektronischen Steuerung werden die bevorzugten Elektroventile 7 nach einem bestimmten Plan ein- und ausgeschaltet, sodass die Pumpe unterbruchlos Pressluft erzeugt und in ein 1000 km langes oder längeres Pipelinerohr als Speicher 5 mit bis 200 bar Druckluft oder mehr füllt. Erfindungsgemässe Wasser-Kolbenpumpen haben einen sehr guten Wirkungsgrad bis 95 %. Die Speicherleistung kann durch die Anzahl der Rohre und die Förderleistung durch die Kolbenpumpe bestimmt werden, wobei gerade der hohe Wirkungsgrad der Wasser-Kolbenpumpe hervorzuheben ist. In den Figuren ist zwar angedeutet, dass sich die Wasser-Kolbenpumpe 9 im Becken befindet, tatsächlich ist sie jedoch ausserhalb angeordnet.

Das Wasser fliesst in das Rohr 2.1 ein. Durch das einfliessende Wasser wird die Luft zusammengepresst und durch das Rückschlagventil 3 oben hindurch in den Speicher 5, beispielsweise ein 1000 km langes Pipelinerohr, gepresst und befüllt dieses langsam mit Pressluft. Eine Vorrichtung verhütet, dass das Wasser in das Pipelinerohr fliessen kann. Ein Druckschalter schaltet die Kolbenpumpe auf Rohr 2.2 um mit gleichzeitigem Öffnen des Füllventils 7 von Rohr 2.2. Das Wasser in Rohr 2.1 fliesst bei gleichzeitigem Öffnen des unteren Rohres 2.1 und Öffnen des oberen Luftabschlussventils 4 durch Schwerkraft in das Wasserbecken 1 zurück.

Während das erste Wasser aus Rohr 2.1 zurückfliesst, ist das zweite Rohr 2.2 bereits in Füllung begriffen und drückt die Druckluft durch das Rückschlagventil 3 bereits in das 1000 km lange Pipelinerohr. Jetzt wird bereits das dritte Rohr 2.3 gefüllt, und das Wasser fliesst schon durch Öffnen des Ventils 7 in das dritte Rohr 2.3, während das Wasser aus dem Rohr 2.2 durch das Öffnen des unteren Ventils 7 in das Wasserbecken 1 zurückfliesst.

Währenddem das Wasser aus dem Rohr 2.1 fertig zurückgeflossen ist, kann es nach Befüllung des Rohrs 2.3 wieder in das Rohr 2.1 gefüllt werden. Mit dieser Reihenfolge wird erreicht, dass immer ein Rohr unterbruchlos in Befüllung ist.

### Pressluftspeicherung zB. im 1000 km langem Pipelinerohr

Für Speicher 5 eigenen sich die gleichen Pipelinerohre wie für Gasleitungen. Momentan wird eine Gasleitung ca. 1000 km durch die Schweiz gebaut von Italien bis nach Holland. Diese Gasleitung hat einen Innendurchmesser von 80 cm, ist innen mit Expoxi-Harz beschichtet, um die Gasdichtheit der Gasrohre zu gewährleisten, und wird mit 200 bar belastet. Sie könnte auch für Energiespeicherung statt für Gasleitung verwendet werden. Um die Explosionssicherheit bei Energiespeicherung zu gewährleisten, könnte ca. alle 10 m, 50 m - 100 m oder mehr eine Zwischenwand mit einem kleinen Loch eingebaut werden. Dieses kleine Loch kann noch mit einem automatischen Schliessventil ausgerüstet werden, das bei einer Gefahr sofort schliesst und eine Explosion verhindert. Diese Explosionssicherung gilt nur für die Energiespeicherung mit Pressluft. Wenn Pressluft in diesem Rohr gespeichert würde, könnten ca. bei 1000 km Länge 1 Mio. kWh gespeichert werden.

### Druckreduzierventil am Ende des Pipelinerohrs als Beispiel eines Speichers

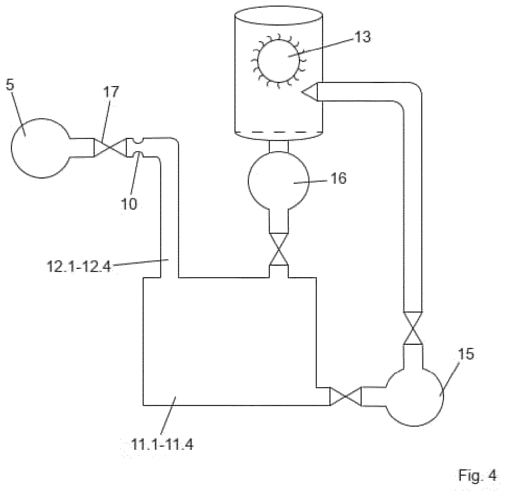

Da Peltonturbinen bei 200 bar Wasserdruck nicht mehr richtig funktionieren, muss der Luftdruck am Ende des Pipelinerohrs auf 50-70 bar reduziert werden. Dies geschieht gemäss Figur 4 mit einem Druckreduzierventil 10 auf 50 - 70, wie gesagt am Ende des Pipelinerohrs. Bei diesem Druck haben Peltonturbinen einen Wirkungsgrad von bis 95%.

### Peltonturbinen- und wasserdichter abgetrennter Elektro Generatorraum mit Schaltanlage

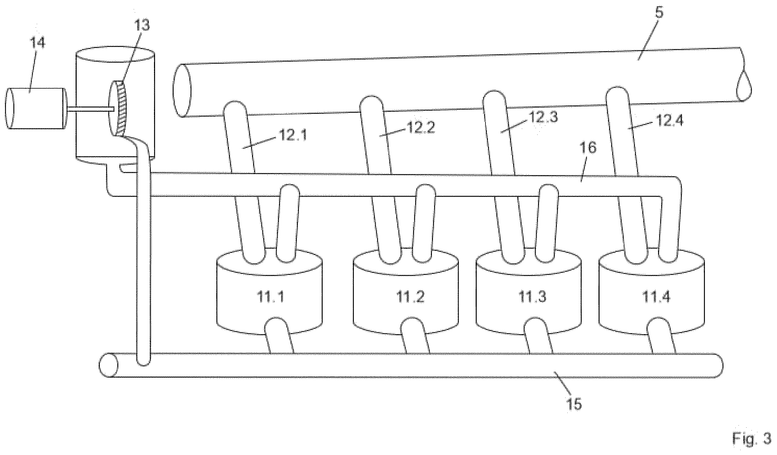

Ein Kraftwerk gemäss Figur 3 und 4 besteht z.B. also aus einem einstöckigen Gebäude. Im Erdgeschoss auf ca. 6 bis 7 m Höhe stehen auf dem Boden vier druckfeste, mit sauberem Wasser gefüllte Behälter 11.1-11.4, die mindestens eine Druckfestigkeit von 50-70 bar aufweisen.

Im nachfolgend ersten Stock befindet sich ein 5 m hohe wasserdichte Raum mit einer Peltonturbine 13 und einem abgetrennten Raum mit einem Elektrogenerator 14 mit Schaltanlage. Von jedem Drucktank von den vier druckfesten Wasserbehältern 11.1-11.4 führt je eine Druckluftleitung 12.1-12.4 zum Druckreduzierventil 10 und über ein weiteres Ventil 17 zu dem Pipelinerohr 5.

Bei der Inbetriebsetzung des Speicherkraftwerkes wird also zuerst ein Wassertank 11.1-11.4 mit Pressluft von 50 - 70 bar unter Druck gesetzt und über einen Druckwasserverteiler 15 der Peltonturbine 13 zugeführt. Das Druckwasser setzt die Turbine 13 in Betrieb und diese erzeugt über den Generator 14 Strom. Das Wasser in diesen vier Behältern wird nacheinander unter Druck aus dem Pipelinerohr 5 gesetzt und treibt die Turbine nacheinander an. Das Abwasser füllt immer wieder die Behälter 11.1-11-4 in einem Kreislauf über eine Wasserrücklaufrohr 16. Die Wasserturbine muss ständig ohne Unterbruch unterWasserdruck eines Behälters 11.1-11.4 sein. Die elektronische Steuerung besorgt den ununterbrochenen Wasserantrieb der Peltonturbine. Diese Erfindung ermöglicht die Speicherung umweltfreundlicher Sonnen - und

Windenergie und übriger sauberer Energien vom Sommer in den Winter.

Das Wasserkraftwerk wird vorzüglich in der Nähe einer Energiespeicheranlage z.B. eines Schweizersees gebaut. In einem Schweizersee sind parallel nebeneinander verlegt auf dem Boden des Sees mehrere Pipelinespeicherrohre möglich.

Mit einer Druckerhöhung der Speicherrohre auf 300 bar könnte sogar eine Verdoppelung der Energiemenge in den explosionssicheren Druckrohren erreicht werden mit Druckreduktionsventil am Ende des Pipelinerohrs auf 50 bis 70 bar für die Peltonturbine. Die saubere Energiespeicherung wäre damit erreicht.

### Stromspeichersystem

Das neue Stromspeichersystem mit Wasserkolbenpumpen erlaubt erstmals preisgünstige Sommerenergie mittelst Pressluft mit hohem Wirkungsgrad und Pipelinerohren im Winter zu speichern. Die Schweiz steuert auf eine Stromknappheit im Winter hin (Crashgefahr). Die Erfindung des neuen Wasserkolbenkompressors ermöglicht den Billigstrom in ganz Europa in Pipelinerohren, vom Sommer- in den Winter saisonal zu speichern, und in Strom umzuwandeln in grossen Mengen. Auch die vielen Dächer- und Freilandsolaranlagen auf Feldern sowie Windparkanlagen helfen mit, Sommerstrom in den Winter zu speichern.

### Solaranlagen

Eine spezielle Gelegenheit wird an den Autobahnen bestehen mit Pipeline - Speicherrohren von 800 mm Durchmesser und Explosionssicherung gemäss Patentanmeldung, die gleichzeitig als Fundament für Solarpaneele dienen können und eine starke Verbilligung für diese ergeben. Die Rohre können auch teilweise mit Erde überdeckt sein. Die verlegten Rohre können aussen mit einer Betonschicht überdeckt sein und innen mit Expoxi-Harz für die Gasdichtheit sorgen. Für grössere Solarkraftwerke ist es vorteilhaft, diese in Kombination mit Pipelinespeicherrohren durchzuführen. Die Pipelinerohre dienen als Fundament für die Solarpaneele oder geben eine starke Verbilligung für das gesamte Solarkraftwerk, sodann können Solarkraftwerke auch bei Nacht oder bei Bewölkung Strom liefern.

### Schweizerseen

Während die Schweiz mit den Speicherseen in den Alpen eine gute Speicherlösung besitzt, sind sie aber viel zu klein und eine Erweiterung ist nicht möglich wegen der Beschwerden der Naturschützer. Die Schweiz hätte aber die gute Möglichkeit, Pipelinespeicherrohre in den Schweizerseen unsichtbar unter Wasser zu platzieren. Es sind 28 Seen, die sich für diese Lagerung eignen würden. Grosse Energielagerungen wären ohne weiteres möglich. Niemand sieht es. Niemand sieht etwas davon, dass sie auf dem Seeboden liegen. Die Ladung der Speicherrohre im Sommer ist entwickelt und die Umwandlung in Pressluft im Winter ist ebenfalls sehr einfach, und Pressluft in den Pipelinerohren als Stromspeicherung ist absolut giftfrei, beschwerdefrei, umweltfreundlich - und mit Explosionsschutz gefahrlos.

### Flusskraftwerke

Besonders gut für diese Energiespeicherung eignen sich die Flusskraftwerke weil sie mit dem Hochspannungsnetz verbunden sind. Im hochgestauten Wasser des Oberlaufs des Kraftwerks können die Speicherpipelinerohre bis 10 Stücken oder mehr nebeneinander verlegt werden, sodass grosse Speicherrohrlängen möglich sind. Die Flusskraftwerke erhalten die Gelegenheit den spottbilligen Sommerstrom in die Pressluftrohre (Pipelinerohre) einzuspeichern und im Winter teuer zu verkaufen.

### Meerangrenzende Länder

Das erfindungsgemässe Stromspeichersystem eignet sich speziell für meeranstossende Länder mit Windkraftanlagen. Weltweit sind alle meeranstossenden Länder für die Pressluftstromspeicherung für mehrere tausend Km geeignet. Bei rigoroser Anwendung könnte sogar ein Stromüberschuss entstehen. Das wäre sehr gut für die Luftreinhaltung und CO2 Erniedrigung, Klimaschutz anstelle von Kohle, Oel und fossilen Energien. Die Erderwärmung würde abnehmen, was heute ja sehr schwierig zu sein scheint. Die Schweizer Gletscher und Skipisten werden mit der Luftreinhaltung wieder zunehmen.

### Verfahren

Das Verfahren, im Sommer Strom in Pressluft zu speichern und im Winter wieder Pressluft in Strom umzuwandeln mit den beschriebenen Einrichtungen und hohem Wirkungsgrad kann die Schweiz stromsicher machen. Die vorliegende Erfindung der Stromumwandlung in Pressluft und Pressluftumwandlung in Strom gibt der Schweiz mit ihren vielen Seen und allen Ländern mit Meeresangrenzung die Möglichkeit mit Pipelinerohren unter Wasser riesige Mengen von sauberem Strom, wie Wind und Sonne, je nach Pipelinerohrlängen unter Wasser zu speichern. Dadurch entsteht keine CO2 Emission. Die Luftverschmutzung würde radikal abnehmen.

Es ist also sinnvoll im Sommer Wasser- Wind- und Sonnenstrom zu erzeugen, mit dem neuen System in Pressluft umzuformen und im Winter die Pressluft in das Schweizer Stromnetz einzuspeisen.

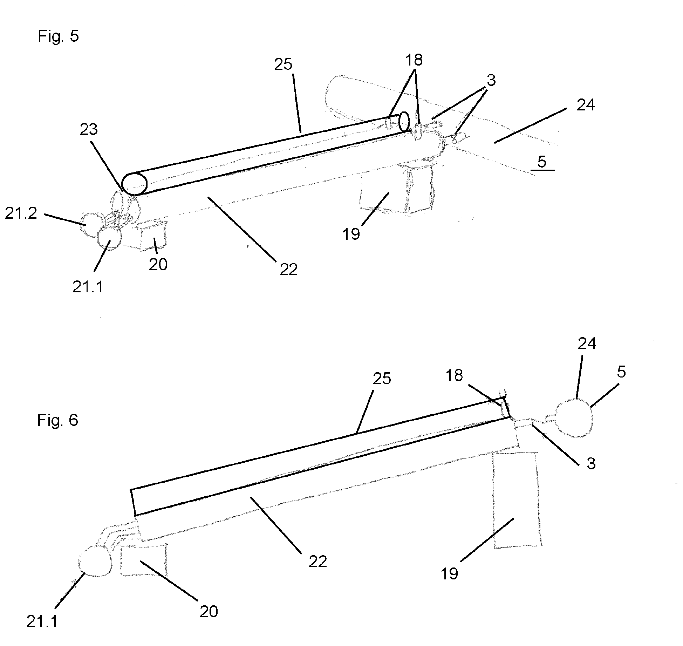

Die Figuren 5 und 6 zeigen ein weiteres erfindungsgemässes Ausführungsbeispiel. Dort sind Pumpen, beziehungsweise Wasserpumpen oder Wasserkolbenkompressoren 21.1, 21.2 gezeigt. Dabei weist jede der Wasserkolbenkompressoren 21.1, 21.2 einen eigenen Druckbehälter in Form von Pipelinerohren bzw. Rohren auf. Dabei soll das eine Rohr als Pipelinerohr Nr.1 22 ca. eine Länge von 10 m Länge und 80 cm Innendurchmesser aufweisen. Gleiches gilt für den anderen Druckbehälter, welcher ebenfalls (auch zu einem Probelauf) als weiteres Probelaufrohr 25 bzw. Rohr 2 sein und dabei beispielsweise ebenfalls eine Länge von ca. 10m haben und einen Innendurchmesser von ca. 80 cm.

Das dritte quer zu den Rohren 2 bzw Pipelinerohren 22, 23 liegende dritte Probelauf-Pipelinerohr 25, dient als Druckluftspeicher, bzw. Speicher 5 und kann als Druckbehälter beispielsweise eine Länge von 10 km und einen Innendurchmesser von 80 cm aufweisen.

In Betrieb herrscht in allen Pipelinerohren 22, 23, 25 der Höchstdruck bis 200 bar. Es muss geprüft werden, ob eine Druckerhöhung mit 300 bar möglich wäre, damit eine doppelte Leistungserhöhung des Speicherkraftwerkes möglich wäre. Von Staat zu Staat sind die Bedingungen für Pipelinerohre anders.

Die neue Erfindung besteht also hier aus zwei Pipelinedruckrohren 22, 23 von je 10 m Länge und Innendurchmesser von 80 cm und einem Probelaufpipelinerohr 25 in Form des Druckluftspeichers 5 der draufgelegt ist und einem Pipelinegesamtdruckrohr von ca. 10 km und 80 cm Innendurchmesser aufweist und dabei zwei neu entwickelte Wasserkolbenkompressoren 21.1, 21.2 umfasst.

Der Vorgang ist dabei im Einzelnen wie folgt:
Vor Beginn des Druckvorganges muss der Drucktank 1 (Pipelinerohr Nr. 1 22) mit Wasser gefüllt sein. Darnach startet die Wasserkolbenpumpe 21.1. im Tank 1 (Pipelinerohr Nr. 1 Bezugsziffer 22) und pumpt das Wasser in Wassertank in Form des (Pipelinerohr Nr. 2 Bezugsziffer 23) voll, und drückt dadurch die Luft durch das Rückschlagventil 18 in das Probelaufpipelinerohr 25. Danach wird das Wasser im Wassertank mit der Kolbenpumpe 21.1, 21.2 wieder zurück in den Tank 1 in Form des Pipelinerohres 22 gepumpt. Jetzt komprimiert Tank 1 (also Pipelinerohr Nr.1 Bezugsziffer 22) die Luft durch das Rückschlagventil 18 in das Probelauf- Pipelinerohr 25.

Darnach wird das Wasser im Tank 1, also Pipelinerohr Nr.1 (Bezugsziffer 22) mit der Wasserkolbenpumpe 21.1 wieder neu in den Tank 2, also Pipelinerohr Nr. 2 (Bezugsziffer 23) gepumpt. Die ständige Hin-und Herbewegung von Wasser im Tank 1 zu Tank 2 für die Luftkomprimierung in das Probelauf- Pipelinerohr 25, das oben aufliegt auf den beiden Pipelinerohren Nr. 1 und Nr. 2. (Pipelinerohre 22, 23).

Der Pumpvorgang wiederholt sich ständig durch das hin-und herpumpen von Wasser von einem Rohr zum andern für die Luftkomprimierung in das Probelauf-Pipelinerohr 25.

Zusammengefasst lässt sich festhalten, dass der Wassertank (Pipelinerohr Nr. 1 Bezugsziffer 22) mit Wasser gefüllt wird. Danach wird die dazugehörige Wasserkolbenpumpe 21.1 angelassen. Das Wasser wird von der Pumpe, also der Wasserkolbenpumpe 21.1 in Wassertank 2 (Pipelinerohr Nr. 2 (Bezugsziffer 23) gepumpt. Wenn Wassertank 2 (Pipelinerohr Nr. 2 Bezugsziffer 23) vollgepumpt ist, schlägt das Rückschlagventil 18 an und die Pressluft gelangt in das Probelauf-Pipelinerohr 25. Jetzt wird die Wasser- Kolbenpumpe 21.2 von Drucktank 2 (also dem Pipelinerohr Nr.2 Bezugsziffer 23) angelassen. Jetzt wird Wasser von Tank 2 wieder in Tank 1 gepumpt und schlägt Pressluft auch wieder in Probelauf-Drucktank 25 ein.

Den Probelauf von Tank 1 und Tank 2 ins Probelauf-Pipelinerohr 25 ist notwendig, damit man weiss, wie sich das Wasser durch die Komprimierung im Pipelinerohr Nr. 3 (Bezugsziffer 24) erwärmt, bevor wir die komprimierte Luft in das Pipelinerohr von z.B. 10 km Länge laufen lassen.

Tank 1 (Bezugsziffer 22) und Tank 2 (Bezugsziffer 23) haben je ein Öffnungsventil oder auch als Lüftungsventil 18 bezeichnet.

Damit beim abpumpenden Wasser von Pumpe 21.1 und Pumpe 21.2 Luft nachfliessen kann, muss ein weiteres Ventil in Form des Lüftungsventils 18 atmosphärische Luft von der Umgebung nachfliessen lassen können, damit bei laufendem Pumpenlauf das Ventil, also das Lüftungsventil 18 automatisch öffnet und wieder schliesst, sonst würde ja im Tank 1 (Bezugsziffer 22) und/oder Tank 2 (Bezugsziffer 23) ein Vakuum entstehen.

Die Motorendrehzahl der Wasserkolbenpumpen 21.1 und 21.2 muss automatisch reguliert werden können, sowie weitere notwendige Steuerungen sowie die Hochspannungsnetzanpassung.

Sollte durch die Luftkompression zu viel Wärme entstehen, muss die Wärme im Probelauf-Pipelinerohr 25 zusätzlich abgeführt werden können, was durch das Meerwasser, Seewasser oder Flusswasser geschehen kann. Die ganze Druckanlage wird vollautomatisch gesteuert.

Dabei spielt die Neuentwicklung eines Wasserkolbenkompressors für grosse Speicherleistung von Elektrizität mit Pressluft eine wichtige Rolle.

Im Sommer fällt die zu speichernde Elektrizität nicht regelmässig sondern sehr unregelmässig an, deshalb muss der Kompressor in Form der Wasserkolbenkompressoren 21.1, 21.2 eine sehr grosse Leistung aufweisen und die Speicherleistung muss stark variierbar und anpassbar sein . Es kommt der grosse Kolben Kompressor von Hammelmann in Frage mit einer Leistung von 4000 Liter/ Minute.

Grundsätzlich besteht der neue Kompressor in Form der Wasserkolbenkompressoren 21.1, 21.2 beispielsweise aus zwei druckfesten parallel nebeneinanderliegenden Pipelinerohren (Bezugsziffern 22 und 23) von ca.10 m Länge und 80 cm Innendurchmesser auf Betonsockeln, linkseitig auf 1 m Höhe, welcher als tiefer Sockel 20 bezeichnet wird und rechtseitig auf 2 m Höhe (gemäss Skizze), im Weiteren als hoher Sockel 19 bezeichnet. Die zwei Druckrohre (Pipelinerohre Nr. 1 und Nr.2 Bezugsziffern 22 und 23) brauchen jede für sich eine einzelne Pumpe in Form der Wasserkolbenkompressoren 21.1, 21.2 für das hin- und herpumpen des Wassers.

Die Funktion ist dabei folgende: Mit Hammelmannkolbenkompressoren wird Wasser zwischen den beiden Pipelinerohren (Bezugsziffern 22 und 23) hin- und her gepumpt und der Drucklufterzeugende Wasserkolben in den Wasserkolbenkompressoren 21.1, 21.2 dient der Umwandlung von überschüssiger Sommerelektroenergie in Pressluftenergie.

Kolbenkompressoren werden bevorzugt, weil sie einen Wirkungsgrad bis zu 96 % aufweisen gegenüber Rotationskompressoren von bedeutend weniger Wirkungsgrad.

Ein drittes Pipelinerohr liegt aufgelegt zwischen den beiden Rohren (Bezugsziffern 22 und 23), das mit dem 10 km langen Pipelinerohr (Bezugsziffer 24) verbunden ist.

### Wenn Wasser verdunstet

Durch Wasserverdunstung entsteht Wasserverlust und muss automatisch nachfüllbar sein im Rohr 1 und 2, also den Pipelinerohren Nr. 1 und Nr.2 Bezugsziffern 22 und 23.

Zur Verlängerung der Wassekolbenpumpen kann das Wasser auch mit einem umweltfreundlichen Oel vermischt werden.

### Betonmantel und Pipelinerohr

Damit das Pipelinerohr im Wasser nicht schwimmt, sondern auf den Boden des Sees sinkt, wird es mit einem armierten Betonmantel umgossen, dazu dient eine Spezialwickelmaschine das Pipelinestahlrohe umwickelt. Der Durchmesser des Betonarmierungstahls beträgt 10-16 mm.

Der Abstand zwischen den einzelnen Windungen ist ca. 10 mm. Jeder Umgang des Betonmantels kann an die Aussenhaut des Pipelinerohres einzeln oder mehrfach schweissgepunktet werden. Der Betonmantel stärkt nicht nur die Rohrdruckfestigkeit sondern auch den Rohrmantel vor dem rosten.

Da die Dichtheit der Schweissnähte der Pipelinerohre übergrossen Anforderungen gewachsen sein müssen, werden sie nebst den zusätzlichen Röntgendichtheitsprüfungen mit einer zusätzlichen Dichtheitsschutzmasse überdeckt und zwar von der Innenseite des Rohres wie auch von der Aussenseite des Rohres.

Ein drittes Pipelinerohr liegt aufgelegt zwischen den beiden Rohren Bezugsziffer 22 und 23), das mit dem 10 km langen Pipelinerohr (Bezugsziffer 24) verbunden ist, In dem dritten Pipelinerohr, welches als Probelauf-Pipelinerohr 25 bezeichnet wird, wird den Nutzern ermöglicht, schon einen Probepressluftlauf in diesem kurzen Stück machen zu können, wie es oben beschrieben ist.

Die mit Sommerüberschuss mittelst Pressluft gespeicherte Energie muss am Verbraucherort mit hohem Wirkungsgrad in Elektrizität umgewandelt werden, was mit folgender Erfindung erreicht wird:
Zuerst muss die Pressluft in Wasserdruck umgewandelt werden. Direktumsetzung mit Luftturbinen kommen nicht in Frage, weil dort ein schlechter Wirkungsgrad gegeben ist.

Es kommt nur die Umwandlung von Pressluft in Wasserdruck mit Peltonturbinen in Frage mit einem Wirkungsgrad von bis zu 95 % für die Umwandlung von Luftdruck in Wasserdruck.

Für die Realisierung braucht es am Besten ein zweistöckiges Gebäude. Am Boden eingelassen dieses Gebäudes sind vier Druckfeste Behälter. Im Erdgeschoss befinden sich das Gasdruckreduzierventil.

Von den Wasserpeltonturbinen muss noch gesagt werden, dass sie nur bei einem bestimmten Wasserdruck bis 95 % Wirkungsgrad arbeiten können. Die Druckreduzierung in der ankommenden Pipeline-Speicher Gasleitung von angenommen 200bar muss auf 50- 75 bar reduziert werden, damit dir Peltonturbinen mit bestem Wirkungsgrad laufen.

Im ersten Stock dieses Energiegebäudes kommt die Peltonturbine zu stehen mit dem angekoppelten Generator. Einen Stock höher dieses Gebäudes kommt die Elektroabteilung dieses Kraftwerkes. Der Peltonturbinenraum im ersten Stock ist wasserdicht abgesichert. Das von der Turbine abfliessende Wasser fliesst in die 4 Rohre zurück in die im Boden eingelassenen Druckbehälter. Es zirkuliert also immer das gleiche Wasser. Die Druckbehälter sind mit den nötigen Elektroventilen ausgerüstet und elektronisch gesteuert.

**Bezugszeichenliste**

| | |
|---|---|
| 1 | Becken |
| 2 | Rohr |
| 3 | Rückschlagventil |
| 4 | Luftabschlussventil |
| 5 | Speicher |
| 6 | Wasserablaufventil |
| 7 | Füllventil |
| 8 | Verbindungsleitung |
| 9 | Kolbenpumpe |
| 10 | Druckreduzierventil |
| 11 | Behälter |
| 12 | Rohr |
| 13 | Turbine |
| 14 | Generator |
| 15 | Druckwasserverteiler |
| 16 | Rücklaufrohr |
| 17 | Ventil |
| 18 | Lüftungsventil |
| 19 | Sockel (hoch) |
| 20 | Sockel (tief) |
| 21 | Wasserkolbenkompressor |
| 22 | Pipelinerohr Nr. 1 |
| 23 | Pipelinerohr Nr. 2 |
| 24 | Pipelinerohr Nr. 3 |
| 25 | Probelaufrohr |
| 26 | |
| 27 | |
| 28 | |
| 29 | |
| 30 | |
| 31 | |
| P | Vorrichtung |
| 33 | |

## Patentansprüche

1. Verfahren zum Speichern von Energie aus insbesondere erneuerbaren Energiequellen und Umwandeln dieser gespeicherten Energie in elektrische Energie in einem Speicher (5),
**dadurch gekennzeichnet,**
**dass** in mehreren Rohren (2.1-2.3) abwechselnd Luft unter hohen Druck gesetzt und diese kontinuierlich in den Speicher (5) eingepresst wird.

2. Verfahren nach Anspruch 1, **dadurch gekennzeichnet, dass** die Luft in den Rohren (2.1-2.3) mit Hilfe einer Kolbenpumpe (9) unter den Druck einer Flüssigkeit (13) gesetzt wird.

3. Verfahren nach Anspruch 1 oder 2, **dadurch gekennzeichnet, dass** die Rohr (2.1-2.3) schräg aufgestellt werden.

4. Verfahren nach Anspruch 3, **dadurch gekennzeichnet, dass** mehrere Rohre (2.1-2.3) im Wesentlichen parallel zueinander angeordnet und miteinander verbunden werden.

5. Verfahren nach Anspruch 3 oder 4, **dadurch gekennzeichnet, dass** die Rohre (2.1-2.3) in ein Becken (1) gestellt werden.

6. Vorrichtung zur Durchführung eines Verfahrens zum Speichern von Energie aus insbesondere erneuerbaren Energiequellen (14,14.1) über einen längeren Zeitraum in einem Speicher (5) und Umwandeln dieser gespeicherten Energie in elektrische Energie, **dadurch gekennzeichnet, dass** der Speicher (5) einends einen Anschluss (5) an eine Einrichtung zur Erzeugung eines insbesondere hohen Druckes in dem Speicher (5) und anderenends einen Anschluss (8) an eine Einrichtung zum Erzeugen der elektrischen Energie aufweist.

7. Vorrichtung nach Anspruch 6, **dadurch gekennzeichnet, dass** die Einrichtung zur Erzeugung eines insbesondere hohen Druckes in dem Speicher (5) mehrere Rohre (2.1-2.3) aufweist, die abwechselnd mit einer Kolbenpumpe (9) verbindbar sind.

8. Vorrichtung nach Anspruch 7, **dadurch gekennzeichnet, dass** jedem Rohr (2.1-2.3) ein Wasserablaufventil (6) zugeordnet oder in ihm integriert ist.

9. Vorrichtung nach wenigstens einem der Ansprüche 6 bis 8, **dadurch gekennzeichnet, dass** für die Erzeugung des Druckes in dem Rohr (2.1-2.3) eine Wasser-Kolbenpumpe (9) vorgesehen ist.

10. Vorrichtung nach Anspruch 9, **dadurch gekennzeichnet, dass** für die Kolbenpumpe (9) gereinigtes Wasser mit Öl vorgesehen ist.

11. Vorrichtung nach wenigstens einem der Ansprüche 6-10, **dadurch gekennzeichnet, dass** die Einrichtungen (9) zum Erzeugen der elektrischen Energie eine Turbine, insbesondere eine Pelton-Turbine ist.

12. Vorrichtung nach wenigstens einem der Ansprüche 6 bis 11, **dadurch gekennzeichnet, dass** zwischen die Einrichtung zum Erzeugen der elektrischen Energie und den Speicher (5) eine Mehrzahl von Behälter (11.1 bis 11.4) eingeschaltet ist.

13. Vorrichtung nach Anspruch 12, **dadurch gekennzeichnet, dass** zwischen jeden Behälter (11.1 bis 11.4) und den Speicher (5) ein Druckreduktionsventil eingeschaltet ist.

14. Vorrichtung nach Anspruch 12 oder 13, **dadurch gekennzeichnet, dass** die Behälter (11. 1 bis 11.4) mit einem Druckwasserverteiler (15) und dieser mit der Einrichtung zum Erzeugen der elektrischen Energie verbunden ist.
